Europäisches Patentamt

European Patent Office

Office européen des brevets

(11) Veröffentlichungsnummer: **0 242 750**
A1

## (12) EUROPÄISCHE PATENTANMELDUNG

(21) Anmeldenummer: 87105412.8

(51) Int. Cl.4: **B27K 3/50** , B27K 3/40

(22) Anmeldetag: 11.04.87

(30) Priorität: 19.04.86 DE 3613253

(43) Veröffentlichungstag der Anmeldung:
28.10.87 Patentblatt 87/44

(84) Benannte Vertragsstaaten:
AT BE CH DE ES FR GB GR IT LI NL SE

(71) Anmelder: Dr. Wolman GmbH
Dr.-Wolman-Strasse 31-33
D-7573 Sinzheim(DE)

(72) Erfinder: Marx, Hans-Norbert
Mozartweg 8
D-7580 Buehl-Weitenung(DE)
Erfinder: Goettsche, Reimer, Dr.
Waldstrasse 27
D-7570 Baden-Baden 19(DE)
Erfinder: Klein, Werner
Schwarzwaldstrasse 9a
D-7573 Sinzheim - Leiberstung(DE)

(74) Vertreter: Schweiss, Werner, Dr. et al
BASF Aktiengesellschaft Patentabteilung
Carl-Bosch-Strasse 38
D-6700 Ludwigshafen(DE)

(54) Holzschutzmittel mit 2-Jodbenzoesäureanilid.

(57) Holzschutzmittel enthaltend eine Mischung von 2-Jodbenzoesäureanilid mit einer quartären Ammoniumverbindung.

EP 0 242 750 A1

## Holzschutzmittel mit 2-Jodbenzoesäureanilid

Die vorliegende Erfindung betrifft Holzschutzmittel, die 2-Jodbenzoesäureanilid und eine quartäre Ammoniumverbindung enthalten.

Es ist bekannt, daß 2-Jodbenzoesäureanilid eine gute fungizide Wirkung besitzt, z.B. gegen holzzerstörende Basidiomyceten (DE-16 42 224). Seine praktische Verwendung scheitert jedoch an seiner schlechten Löslichkeit. Die zum ausreichenden Schutz von Holz gegen Pilze notwendige Wirkstoffmenge in Holzschutzmitteln (ca. 1 - 2 % (Gew.-%) für Grundierungen oder Lasuren) kann, bedingt durch seine schlechte Löslichkeit in aliphatischen und aromatischen Kohlenwasserstoffen nur durch Verwendung einer großen Menge (mehr als 10 %) an speziellen Lösungsmitteln (N-Methylpyrrolidon/Dimethylformamid) in dem Holzschutzmittel gelöst werden. Hierdurch werden die Gebrauchseigenschaften der Holzschutzmittel (Trocknung) negativ beeinflußt.

Es ist ferner bekannt, quartäre Ammoniumverbindungen als kationische Emulgatoren zu verwenden. Sie können sowohl in wäßrigen als auch in öligen Mischungen eingesetzt werden.

Es wurde jetzt gefunden, daß eine Mischung aus 2-Jodbenzoesäureanilid und einer quartären Ammoniumverbindung eine sehr gute fungizide Wirksamkeit hat, insbesondere gegenüber Basidiomyceten-Pilzen.

Die erfindungsgemäßen Holzschutzmittel können sowohl in öligen als auch in wäßrigen Mischungen verwendet werden. Es besteht auch die Möglichkeit, Holzwerkstoffe mit den Holzschutzmitteln zu behandeln.

Durch Verwendung von speziellen Lösungsmitteln, z.B. Tributylphosphat können Konzentrate hergestellt werden, die sehr leicht zu der Mischung von anderen Bestandteilen der Holzschutzmittel zugemischt werden können. Die gute fungizide Wirkung des erfindungsgemäßen Holzschutzmittels bewirkt, daß zur Erzielung einer gleichen fungiziden Wirkung wie mit 2-Jodbenzoesäureanilid allein eine geringere Menge an 2-Jodbenzoesäureanilid in Form des erfindungsgemäßen Holzschutzmittels benötigt wird. Diese geringere Menge an 2-Jodbenzoesäureanilid benötigt zur Lösung auch nur eine geringere Menge an Lösungsmittel. Eine weitere Verwendungsmöglichkeit der erfindungsgemäßen Holzschutzmittel ist der Schutz von Holzwerkstoffen gegen Pilzbefall. Die Konzentrate können entweder dem Leim zugemischt werden oder auf die Holzspäne (z.B. bei der Herstellung von Spanplatten) aufgesprüht werden.

Die erfindungsgemäßen Mischungen enthalten quartäre Ammoniumverbindungen und Jodbenzoesäureanilid z.B. im Gewichtsverhältnis von 1:2 bis 20:1, vorzugsweise 2:1 bis 10:1.

Als quartäre Ammoniumverbindungen können hierbei z.B. solche verwendet werden, die der allgemeinen Formel $(R^1R^2R^3R^4N)^+Z^-$ entsprechen, wobei

$R^1$ einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch $C_1$-$C_{20}$-Alkyl oder Halogen substituiert ist,

$R^2$ $C_1$-$C_6$-Alkyl, $C_2$-$C_9$-Alkoxyalkyl
$R^3$ $C_1$-$C_6$-Alkyl, $C_1$-$C_4$-Alkoxy,
$R^4$ $C_1$-$C_{20}$-Alkyl

bedeuten, oder je zwei der Reste $R^1$ bis $R^4$ zusammen mit dem Stickstoffatom einen heterocyclischen Rest bilden, der 4 bis 5 C-Atome, 1 bis 2 N-Atome und eine, zwei oder drei Doppelbindungen enthält, wobei die Kohlenstoffatome gegebenenfalls durch $C_1$-$C_4$-Alkyl oder Halogen substituiert sind, und Z einen Säurerest bedeutet.

Die neuen Mischungen enthalten beispielsweise 10 bis 40 %, insbesondere 15 bis 35 % 2-Jodbenzoesäureanilid und 90 bis 60 %, insbesondere 85 bis 65 % quartäre Ammoniumverbindung. Die gebrauchsfertigen Holzschutzmittel-Lösungen oder -Emulsionen enthalten beispielsweise

a) Mischung mit Kohlenwasserstoffen 0,3 - 0,7 % 2-Jodbenzoesäureanilid, 1,5 - 3,5 % quartäre Ammoniumverbindung, 70 - 93 % flüssige Kohlenwasserstoffe, 5 - 6 % andere organische Lösungsmittel, 0 - 20 % Alkydharz, 0 - 3 % Pigmente, wobei die Summe jeweils 100 % beträgt.

b) Konzentrat für die Emulsion mit Wasser 3 - 7 % 2-Jodbenzoesäureanilid, 30 - 50 % quartäre Ammoniumverbindung, 10 - 20 % organische Lösungsmittel (nicht Kohlenwasserstoff), 30 - 50 % nichtionischer Emulgator (auf Basis Ethylenoxid), wobei die Summe jeweils 100 % beträgt. 1 Teil dieses Konzentrats wird beispielsweise mit 40 bis 60 Teilen Wasser vermischt, um das gebrauchsfertige wäßrige Mittel zu erhalten.

Zur Vergrößerung des Wirkungsspektrums oder zur Erzielung besonderer Effekte kann die Wirkstoffmischung auch mit anderen Wirkstoffen kombiniert werden. Als besonders günstig sind Mischungen mit z.B. folgenden Verbindungen anzusehen:

N-Tridecyl-2,6-dimethylmorpholin
Organozinnverbindungen, wie Tributylzinnoxid und Tributylzinnbenzoat,
Tributylzinn-N-Cyclohexyl-N′-hydroxydiazeniumoxid
Methylenbisthiocyanat
Dimethylalkylaminsalze
Chlorierte Phenole, wie Tetra-und Pentachlorphenol
Tetrachlorisophthalsäure-dinitril
N-Cyclohexyl-N-methoxy-2,5-dimethyl-furan-3-carbonsäureamid
N,N-Dimethyl-N′-phenyl-(N-fluormethylthio)-sulfamid
N,N-Dimethyl-N′-tolyl-(N-fluormethylthio)-sulfamid
Benzimidazol-2-carbaminsäure-methylester
2-Thiocyanomethyl-thiobenzothiazol
Kupfernaphthenat
Kupfer-8-oxychinolin
Alkali-und Metallsalze des N′-Hydroxy-N-cyclohexyl-diazeniumoxids
1-(1′,2′,4′-Triazolyl-1′)-(1-(4′-chlorphenoxy))-3,3-dimethylbutan-2-on
1-(1′,2′,4′-Triazolyl-1′)-(1-(4′-chlorphenoxy))-3,3-dimethylbutan-2-ol
N-(3-(p-tert.-Butylphenyl)-2-methyl-propyl)-cis-2,6-dimethylmorpholin
Hexachlorcyclohexan
O,O-Diethyl-o-3,5,6-trichlor-2-pyridil-thiono-phosphat
Q,O-Diethyl-dithio-phosphoryl-methyl-6-chlorbenoxazolon
2-(1,3-Thiazol-4-yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
2-N-Octyl-4-Isothiazolin-3-on
1,2-Benzisothiazolon-3
1-(4-Chlorphenoxy)-3,3-dimethyl-1-(1H-1,2,4-triazol-1-yl)-butan-2-on
1-(4-Chlorphenoxy)-3,3-dimethyl-1-(1H-1,2,3-triazol-2-yl)-butan-2-ol
O,O-Dimethyl-S-(2-methylamino-2-oxoethyl)-dithiophosphat
O,O-Diethyl-O-(3,5,6-trichlor-2-pyridyl)-thiophosphat
O,O-Dimethyl-S-(N-phthalimido)-methyldithiophosphat
O,O-Diethyl-O-(alpha-cyanbenzyliden-amino)-thiophosphat
6,7,8,9,10-Hexachlor-1,5,5a,6,9,9a-hexylhydro-6,9-methano-2,3,4-benzodioxothiepin-3-oxid
2-sek.-Butyl-phenyl-N-methylcarbamat
2-i-Propoxyphenyl-N-methyl-carbamat
N-Methyl-1-naphthyl-carbamat
Norbornen-dimethanohexa-chlorcyclosulfit
1-(4-Chlorphenyl)-3-(2,6-di-fluorbenzoyl)-harnstoff

Synthetische Pyrethroide, wie

3-(2,2-Dichlorvinyl)-2,2-dimethyl-cyclopropan-1-carbonsäure-3-phenoxybenzylester
3-(2,2-Dichlorvinyl)-2,2-dimethyl-cyclopropan-1-carbonsäure-alpha-cyano-3-phenoxybenzylester
3-(2,2-Dibromvinyl)-2,2-dimethyl-cyclopropan-1-carbonsäure-alpha-cyano-3-phenoxybenzyl-ester
alpha-Isopropyl-4-chlorphenylessigsäure-alpha-Cyano-3-phenoxybenzylester.

Die Erfindung wird an folgenden Beispielen erläutert. Die Grenzwerte nach Auswaschung von imprägnierten Holzstücken gegen Basidiomyceten wurden an Kiefernsplintholz ermittelt (Lösungsmittel Wasser bzw. Aceton).

Das in den folgenden Vergleichsmitteln und erfindungsgemäßen Mischungen verwendete Dimethylalkylbenzylammoniumchlorid weist, wenn nichts anderes angegeben ist, einen Alkylrest einer Kettenlänge von überwiegend mehr als 10 C-Atomen auf, z.B. 40 % $C_{12}$; 50 % $C_{14}$; 10 % $C_{16}$.

Beispiel 1 (Vergleich)

Lösungsmittel Wasser
Dimethylalkylbenzylammoniumchlorid (100 %)
Prüfpilz:    Grenzwert kg/m³
Poria vaporaria  1,8 - 2,8 kg/m³
Coniophora puteana 2,8 - 4,4 kg/m³

Beispiel 2 (Vergleich)

Lösungsmittel Wasser
Dimethyldialkylammoniumchlorid
(Alkyl: mehr als 90 % $C_{10}$)
Prüfpilz:    Grenzwert kg/m³
Poria vaporaria  1,1 - 1,8 kg/m³
Coniophora puteana 1,8 - 2,8 kg/m³

Beispiel 3 (Vergleich)

Lösungsmittel Wasser
Trimethylcetylammoniumbromid
Prüfpilz:    Grenzwert kg/m³
Poria vaporaria  1,2 - 2,8 kg/m³
Coniophora puteana 2,8 - 4,4 kg/m³

Beispiel 4 (Vergleich)

Lösungsmittel Aceton
2-Jodbenzoesäureanilid
Prüfpilz:    Grenzwert kg/m³
Poria vaporaria  2,4 - 5,0 kg/m³
Coniophora puteana 0,5 - 1,2 kg/m³

Beispiel 5 (erfindungsgemäß)

    Lösungsmittel Aceton
20 % Jodbenzoesäureanilid
80 % Dimethylalkylbenzylammoniumchlorid
Prüfpilz:     Grenzwert kg/m³
Poria vaporaria  0,5 - 0,9 kg/m³
Coniophora puteana 0,9 - 1,2 kg/m³

Beispiel 6 (erfindungsgemäß)

    Lösungsmittel Aceton
33 % Jodbenzoesäureanilid
67 % Dimethyldialkylammoniumchlorid
Alkyl: mehr als 90 % $C_{10}$
Prüfpilz:     Grenzwert kg/m³
Poria vaporaria  0,5 - 0,9 kg/m³
Coniophora puteana 0,3 - 0,5 kg/m³

Beispiel 7 (erfindungsgemäß)

    Lösungsmittel Aceton
15 % Jodbenzoesäureanilid
85 % Trimethylcetylammoniumchlorid
Prüfpilz:     Grenzwert kg/m³
Poria vaporaria  0,5 - 0,9 kg/m³
Coniophora puteana 0,9 - 1,2 kg/m³

Anwendungsbeispiel 1

Holzschutzöl

    0,50 % Jodbenzoesäureanilid
3,00 % Dimethylalkylbenzylammoniumchlorid
1,00 % Ethanol
5,00 % Tributylphosphat
91,50 % Mischung Aliphaten/Aromatenbenzin 5:1
    Siedebereich ca. 180 - 220°C

Anwendungsbeispiel 2

Holzschutzgrundierung

    0,50 % Jodbenzoesäureanilid
2,70 % Dimethylalkylbenzylammoniumchlorid
0,90 % Ethanol
5,00 % Tributylphosphat
6,00 % langöliges Leinöl-Alkydharz
84,90 % Mischung Aliphaten/Aromatenbenzin 5:1
    Siedebereich ca. 180 - 220°C

Anwendungsbeispiel 3

Holzschutzlasur

    0,50 % Jodbenzoesäureanilid
2,00 % Dimethylalkylbenzylammoniumchlorid
0,40 % Ethanol
5,00 % Tributylphosphat
15,00 % langöliges Alkydharz (Basis Sojaöl/Leinöl)
0 - 3 % Pigmentzubereitungen (Eisenoxid, Ruß)
77,1 - 73,1 % Mischung Aliphaten/Aromatenbenzin 5:1
    Siedebereich ca. 180 - 220°C

Anwendungsbeispiel 4

Wäßriges Holzschutzmittel

    5,00 % Jodbenzoesäureanilid
5,00 % Tributylphosphat
40,00 % Dimethylalkylbenzylammoniumchlorid
10,00 % Ethanol
40,00 % Ethoxiliertes Nonylphenol (etwa 10 Mol Ethylenoxid je Mol Nonylphenol)
2 Teile dieser Mischung in 98 Teilen Wasser emulgiert ergibt eine Klaremulsion, z.B. für Kesseldruckverfahren.

Anwendungsbeispiel 5

Konzentrat zum Schutz von Holzwerkstoffen

    25,00 % Jodbenzoesäureanilid
25,00 % Tributylphosphat
40,00 % Dimethylalkylbenzylammoniumchlorid
10,00 % Ethanol

0,75 Teile dieser Mischung werden (in Mischung mit Leim) auf 100 Teile trockene Holzspäne aufgesprüht.

**Ansprüche**

    1. Holzschutzmittel auf der Basis von 2-Jodbenzoesäureanilid, dadurch gekennzeichnet, daß es zusätzlich eine quartäre Ammoniumverbindung enthält.

    2. Holzschutzmittel nach Anspruch 1, dadurch gekennzeichnet, daß es ein Lösungsmittel in Form von Wasser oder einer Mischung von flüssigen Kohlenwasserstoffen enthält.

    3. Verfahren zum Schutz von Holz, dadurch gekennzeichnet, daß man das Holz mit einem Holzschutzmittel gemäß Anspruch 1 behandelt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,A | DE-A-1 642 224  (B.A.S.F.) <br> * Seite 3, Zeile 7 - Seite 4, Zeile 8; Patentansprüche * | 1-3 | B 27 K   3/50 <br> B 27 K   3/40 |
| A | EP-A-0 124 126  (B.A.S.F.) <br> *   Seite  1,   Zeilen   10-34; Beispiele 2,3; Patentansprüche * | 1-3 | |
| A | DE-A-3 308 303  (KYMI KYMMENE OY) <br> * Seite 6, Zeile 33  -  Seite 7, Zeile  3; Patentansprüche 1,3,5-9 * | 1-3 | |

| RECHERCHIERTE SACHGEBIETE (Int. Cl. 4) |
|---|
| B 27 K <br> A 01 N |

Der vorliegende Recherchenbericht wurde für alle Patentansprüche erstellt.

| Recherchenort | Abschlußdatum der Recherche | Prüfer |
|---|---|---|
| DEN HAAG | 11-08-1987 | FLETCHER.A.S. |